**Europäisches Patentamt**

**European Patent Office**

**Office européen des brevets**

(19)

(11) **EP 1 281 905 A1**

(12) **EUROPEAN PATENT APPLICATION**
published in accordance with Art. 158(3) EPC

(43) Date of publication:
**05.02.2003 Bulletin 2003/06**

(51) Int Cl.7: **F16L 15/04**

(21) Application number: **01930012.8**

(86) International application number:
**PCT/JP01/03881**

(22) Date of filing: **09.05.2001**

(87) International publication number:
**WO 01/086185 (15.11.2001 Gazette 2001/46)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **10.05.2000 JP 2000137665**

(71) Applicant: **SUMITOMO METAL INDUSTRIES, LTD.
Osaka-shi, Osaka 541-0041 (JP)**

(72) Inventor: **TSUJIMURA, Takuya
Wakayama-shi, Wakayama 640-8137 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **METHOD OF TIGHTENING PIPE JOINT**

(57) A tightening method for a special joint having unthreaded metal-to-metal sealing surfaces and unthreaded shoulder portions. By controlling the ratio of the tightening torque at the completion of tightening to the shouldering torque at the time when the unthreaded shoulder portions come into contact to be in the range of 1.25 - 20 and more preferably 1.4 - 10, sufficient gastightness can be guaranteed and plastic deformation due to overtightening can be prevented regardless of the type of pipe joint or the conditions of use. As a result, it can be widely utilized in the tightening of special joints used with oil well pipes even under the present state of increasingly severe oil well environments.

# Fig. 3

EP 1 281 905 A1

**Description**

Technical Field

This invention relates to a tightening method for a pipe joint having a threaded portion and an unthreaded shoulder portion on the end of a pipe, and more particularly it relates to a tightening method in which adequate gastightness can be guaranteed and plastic deformation due to overtightening can be avoided even with a pipe joint used in a severe oil well environment.

Background Art

In recent years, the environments in which oil wells and gas wells are excavated are becoming more and more severe, and there is an increasing trend towards greater depths in oil wells and the like, so oil well pipes used in such excavations are supplied in large quantities. In general, a tightening method by threaded engagement of pipe joints having threads is used for the connection of oil well pipes at the site of excavation.

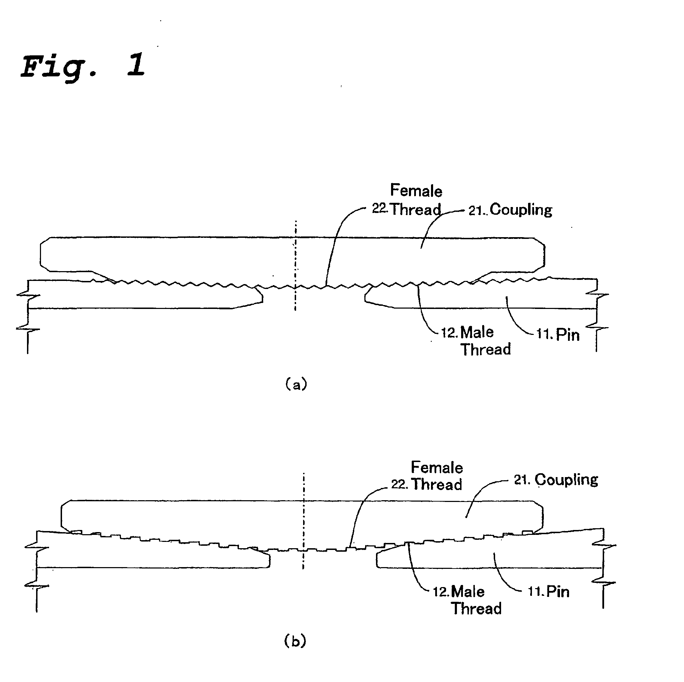

Figure 1 is a cross-sectional view in the radial direction of a pipe of the tightened state of a threaded joint prescribed by the American Petroleum Institute (referred to below as "API"). In this figure, (a) shows the case of a round thread, and (b) shows the case of a buttress (trapezoidal) type thread. As shown in Figure 1, in the case of either a round thread or a buttress type thread, the structure is such that a male thread 12 formed on the pipe end of a pin 11 is connected to a female thread 22 formed on a coupling 21. In this structure, after completion of tightening of the threaded joint, there is a gap at the end of the pin, and the ends of the pin and the coupling do not contact.

In the threaded joint shown in Figure 1, the portion where the pin 11 and the coupling 21 contact each other is only the portion where the male thread 12 and the female thread 22 are joined to each other, and as oil well environments become severe as described above, the problem develops that gastightness deteriorates in the pipe joint portion due to influences such as the weight of the pipe and the pressure applied to the inner and outer surfaces of the pipe. Therefore, special joints have recently come to be used in order to solve such problems.

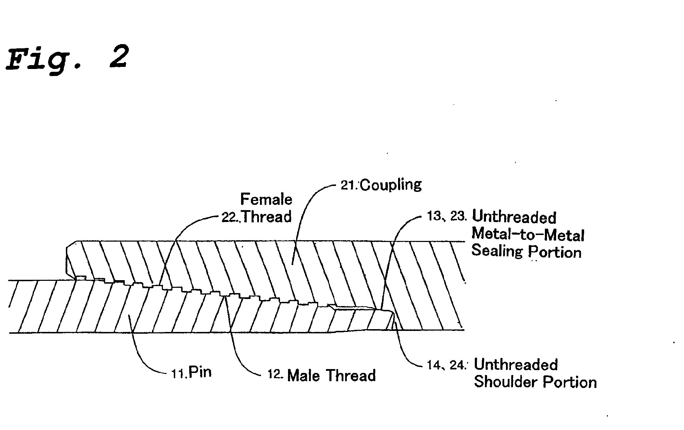

Figure 2 is a cross-sectional view as viewed in the radial direction of a pipe of an example of the structure of a special joint. As shown in Figure 2, a special joint has a structure in which a pin 11 having a male thread 12, an unthreaded metal-to-metal sealing surface 13, and an unthreaded shoulder portion 14 on the end of a pipe is connected to a coupling 21 which has a female threaded portion 22, an unthreaded metal-to-metal sealing surface 23, and an unthreaded shoulder portion 24 so as to mate with the above-described pin 11. Using a special joint having such a structure, the pin 11 and the coupling 21 contact each other not only in the portion where the male thread 12 and the female thread 22 are connected to each other but also between the unthreaded metal-to-metal sealing surfaces 13 and 23 and between the unthreaded shoulder portions 14 and 24, and a higher degree of gastightness can be guaranteed.

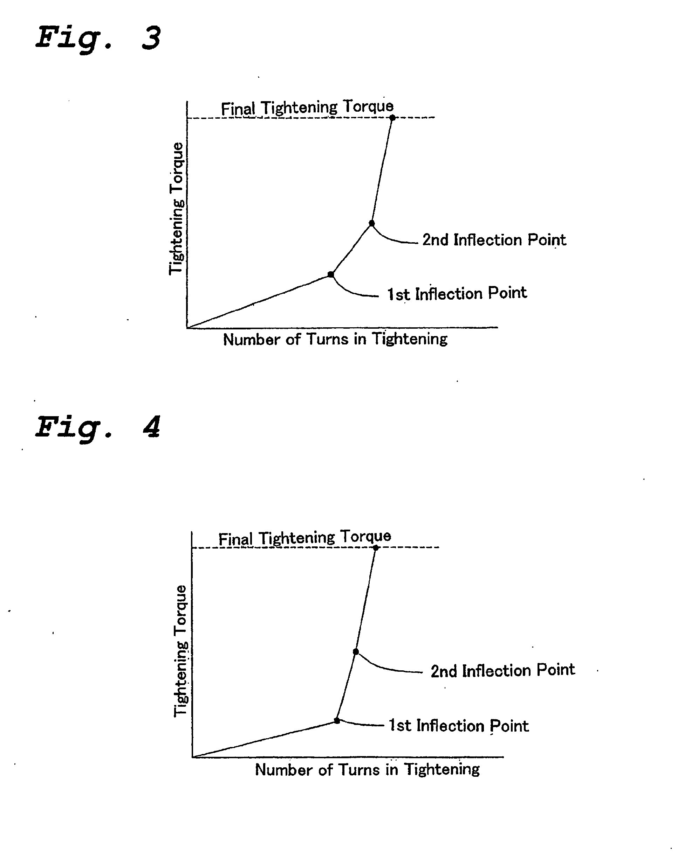

When tightening a special joint having the structure shown in Figure 2, as shown in the below-described Figure 3, the tightening torque increases in a stepwise manner, and the tightening torque at the completion of tightening (when necessary, this will be referred to below as the "final tightening torque") can be predicted to a certain degree. As a result, problems such as the following can be solved.

Namely, with a threaded joint prescribed by API, since the position at the completion of tightening is prescribed, in order to satisfy this requirement, it is necessary to visually ascertain the tightening position at the time of tightening, and there was the problem that operability was poor, but such a problem can be solved.

Accordingly, when tightening a special joint, control of tightening is possible through torque control, and a great improvement in operability can be achieved. However, if the torque applied to the unthreaded shoulder portion of a special joint, which is called delta torque, is too small, since an oil well pipe is inserted vertically into an oil well or the like and connected, a tensile force due to the weight of the pipe acts such that the unthreaded shoulder portions which contact by abutment become separate, and it becomes impossible to guarantee an adequate gastightness. In addition, the metal-to-metal sealing surfaces of a special joint are tapered surfaces, thereby developing an inflection point in the tightening torque as a pin and a coupling are tightened.

Figure 3 is a diagram which qualitatively shows the relationship between the tightening torque and the number of turns in tightening from the start to the completion of the tightening of a special joint. The first inflection point in the figure is the point during tightening of a special joint at which the unthreaded metal-to-metal sealing surfaces 13 and 23 which are formed by tapered surfaces first contact. The steeper the slope of the tapered surfaces, the larger the component of force in the radial direction, so the degree of inflection at this point becomes large. The second inflection point is the point at which the unthreaded shoulder portions 14 and 24 first contact. The tightening torque at this point is referred to as the shouldering torque.

Explaining the relationship shown in Figure 3 in greater detail, the tightening torque up to the first inflection point is the torque which is produced by interference between the male thread 12 and the female thread 22, i.e., it is the torque due to only the threaded portions. The tightening torque between the first inflection point and the second inflection point is the sum of the tightening torque due to the threaded portions and the torque produced by interference between the unthreaded metal-to-metal sealing surfaces 13 and 23. At the second inflection point, as described above, the torque due to interference between the threaded portions and the torque due to interference between the metal-to-metal sealing surfaces are limited by abutment of the unthreaded shoulder portions 14 and 24 against each other, and the tightening torque at this point is the shouldering torque, which is the sum of the respective torque limits. The tightening torque after the second inflection point is one in which the delta torque produced by interference between the unthreaded shoulder portions 14 and 24 is added to the shouldering torque.

Accordingly, as shown in Figure 3, the tightening torque of a special joint can be expressed by the relationship:

(final tightening torque) = (shouldering torque) + (delta torque).

There are also special joints which do not have unthreaded metal-to-metal sealing surfaces 13 and 23 like those described above. When tightening a special joint having such a structure, the above-described first inflection point is of course not present.

There have been proposals concerning tightening methods for special joints. For example, JP 06-221475A discloses a method in which the remaining number of turns necessary to guarantee a predetermined target delta torque is found from a curve showing the relationship between the tightening torque and the number of turns for an actual joint. However, when the method proposed in the above-described patent publication is applied in operations, it is necessary to set the target delta torque depending on the material or dimensions or the like of the pipe joint and to set it each time there is a change in the conditions of use such as the presence or absence of a lubricant.

In addition, in the above-described patent publication, there is no mention of a proper range for setting the delta torque. If the value set for the target delta torque is too small, it is not possible to obtain sufficient gastightness, and if the value set for the target delta torque is too large, there is the problem that the pipe itself may possibly undergo plastic deformation. Accordingly, the proposed tightening method can not be utilized in the excavation of actual oil wells or the like.

Disclosure of the Invention

As described above, with respect to a tightening method for a special joint, a method has been proposed in which the necessary remaining number of turns is found based on a predetermined target delta torque so that a final tightening torque is guaranteed. However, in this method, the set value of the target delta torque must be varied depending on the material or the dimensions or the like of the pipe joint and the conditions of use such as the presence or absence of a lubricant, so it is complicated. In addition, there is no knowledge concerning a proper range of the delta torque, and there was the problem that it could not be used in the excavation of an actual oil well or the like.

This invention was made in light of the above-described problems, and its object is to provide a tightening method for a pipe joint in which in the tightening of a pipe joint, an adequate gastightness can be guaranteed with preventing plastic deformation due to overtightening, regardless of the type of the pipe joint or the conditions of use, by determining a proper range for setting the final tightening torque from the shouldering torque.

Accordingly, this invention resides in the following tightening method for a pipe joint. Namely, it is a tightening method for a pipe joint comprised of a pin and a coupling, the pin having a male thread, an unthreaded metal-to-metal sealing surface, and an unthreaded shoulder portion formed on the end of a pipe, the coupling having a female thread, an unthreaded metal-to-metal sealing surface, and an unthreaded shoulder portion so as to mate with the pin, characterized in that the tightening torque at the completion of tightening of the pipe joint is 1.25 - 20 times the shouldering torque at the time when the unthreaded shoulder portions of the pin and the coupling come into contact with each other by abutment.

In the above-described tightening method for a pipe joint, in order to guarantee good gastightness even under severe load conditions of the joint, the tightening torque at the completion of tightening is preferably 1.4 - 10 times the shouldering torque.

When determining the shouldering torque, contact by abutment between the unthreaded shoulder portions of the pin and the coupling is preferably found from a curve showing the relationship between the tightening torque and the number of turns, and the contact is preferably confirmed with a gap measurement device. The gap measurement device can be any device which can measure a gap on the order of 0.1 mm. In particular, it is preferable to use a clearance gauge.

Brief Description of the Drawings

Figure 1 is a cross-sectional view in the radial direction of a pipe showing the tightened state of a threaded joint prescribed by API, in which (a) shows the case of a round thread, and (b) shows the case of a buttress (trapezoidal) type thread.

Figure 2 is a cross-sectional view in the radial direction of a pipe of an example of the structure of a typical special joint.

Figure 3 is a diagram qualitatively showing the relationship between the tightening torque and the number of tightening turns from the start to the completion of the tightening of a special joint.

Figure 4 is a diagram qualitatively showing the relationship between the tightening torque and the number of tightening turns from the start to the completion of tightening for a special joint for the case in which there is a large inflection at a first inflection point.

Best Mode for Carrying Out the Invention

In a tightening method for a pipe joint according to the present invention, the final tightening torque is set to be 1.25- 20 times the shouldering torque. Thus, a good gastightness can be guaranteed without the need to control the delta torque itself. In a conventional method, it was necessary to vary the final tightening torque or the delta torque in accordance with variations in the tightening conditions or the presence or absence of a lubricant. However, in a tightening method according to the present invention, by performing control on the basis of the final tightening torque so that the ratio of the final tightening torque to the shouldering torque is within a prescribed range, the gastightness of a pipe joint can be guaranteed even when there are variations in any of the conditions.

In other words, in a tightening method according to the present invention, regardless of the type, the dimensions, or the material of a pipe joint, the gastightness of the pipe joint can be guaranteed by controlling the ratio of the final tightening torque to the shouldering torque so as to be in the range of 1.25 - 20.

In this invention, when the final tightening torque is too small a value of less than 1.25 times the shouldering torque, even if there is abutment contact between the unthreaded shoulder portions of the pin and the coupling immediately after tightening, it was confirmed by an evaluation test that a sufficient gastightness is not obtained when the joint is exposed to a severe oil well environment. Therefore, it is necessary for the final tightening torque to be at least 1.25 times the shouldering torque.

On the other hand, if the final tightening torque exceeds 20 times the shouldering torque, tightening becomes excessive, and plastic deformation may occur, so it is necessary for the final tightening torque to be at most 20 times the shouldering torque.

It was confirmed that in order to guarantee gastightness even under the conditions of a more severe joint evaluation test, it is preferable to control the ratio of the final tightening torque to the shouldering torque to be 1.4 - 10. Namely, by making the final tightening torque at most 10 times the shouldering torque, even when a higher compressive force is applied, the compressive force acting on a joint can be decreased. On the other hand, by making the final tightening torque at least 1.4 times the shouldering torque, even when an even higher tensile load is applied, the compressive force necessary to guarantee good gastightness can be maintained.

As described previously, the metal-to-metal sealing surfaces which are provided on the pin and coupling are normally tapered surfaces. Thus, the slope of the tapered surfaces increases, the force component in the radial direction increases, and the degree of inflection or bending at the first inflection point increases.

Figure 4 is a diagram which qualitatively shows the relationship between the tightening torque and the number of tightening turns from the start to the completion of tightening for a special joint of a case in which the degree of inflection at the first inflection point is large. When tightening a pipe joint having a torque curve like that shown in Figure 4, the inflection at the second inflection point is small, so there is the possibility of the first inflection point being misread as the shouldering torque and of tightening being completed at a value which is lower than the range for the final tightening torque prescribed by the present invention. In such a case, it is preferable to ascertain abutment contact between the unthreaded shoulder portions of the pin and the coupling using a gap measuring device such as a clearance gauge or the like. In addition to a clearance gauge which is given as an example, any type of gap measuring device can be employed such as a mechanical type, an optical type, an electrical type, or the like.

(Example)

In order to confirm the effects of the method according to the present invention, an gastightness test was carried out using the following joints A and B:

Joint A: API Grade L80 (with a minimum yield strength of 550 MPa/80 ksi), outer diameter: 88.9 mm, wall thickness: 6.45 mm;

Joint B: API Grade P110 (with a minimum yield strength of 760 MPa/110 ksi), outer diameter: 177.8 mm, wall thickness: 10.36 mm.

Tightening of the above-described special joints A and B was carried out while appropriately varying the ratio of the final tightening torque to the shouldering torque. The gastightness performance of each joint was evaluated using the joint evaluation testing method specified in API 5C5 and an augmented compression test method, the latter being performed in order to test a joint of the same test number under even more severe evaluating conditions.

Thus, in the joint evaluation test method, the compressive load to be applied is made 40% of the yield strength of the pipe body as specified by API 5C5, but in the augmented compression test method, the compressive load was increased to more than 40% of the yield strength of the pipe body, and it was a test method using severe conditions up to 60%. The results of both evaluation tests are shown in Table 1.

Table 1

| | | | | | | Results of Joint Evaluation | | | |
|---|---|---|---|---|---|---|---|---|---|
| Test No. | Joint Type | Measured Torque | | | Torque Ratio | Compressive Load Test (API) | | Augmented Compression Test | |
| | | | TS (N·m) | TF (N·m) | TF/TS (ratio) | Number of Leaks/ Number of Tests | Evaluation | Number of Leaks/ Number of Tests | Evaluation |
| 1 | A | g | 4250 | 4460 | 1.05* | 3/3 | × | 3/3 | × |
| 2 | A | | 3980 | 4420 | 1.11* | 3/3 | × | 3/3 | × |
| 3 | A | g | 3740 | 4410 | 1.18* | 1/3 | Δ | 3/3 | × |
| 4 | A | g | 3550 | 4440 | 1.25 | 0/3 | ○ | 3/3 | × |
| 5 | A | | 3330 | 4430 | 1.33 | 0/3 | ○ | 2/3 | Δ |
| 6 | A | | 3090 | 4410 | 1.43 | 0/3 | ○ | 0/3 | ○ |
| 7 | A | g | 450 | 4420 | 9.83 | 0/3 | ○ | 0/3 | ○ |
| 8 | A | g | 226 | 4430 | 19.6 | 0/3 | ○ | 2/3 | Δ |
| 9 | A | g | 216 | 4440 | 20.6* | 2/3 | Δ | 3/3 | × |
| 10 | B | g | 14790 | 15680 | 1.06* | 3/3 | × | 3/3 | × |
| 11 | B | | 13890 | 15700 | 1.13* | 3/3 | × | 3/3 | × |
| 12 | B | g | 13080 | 15690 | 1.20* | 2/3 | Δ | 3/3 | × |
| 13 | B | g | 12360 | 15700 | 1.27 | 0/3 | ○ | 3/3 | × |
| 14 | B | | 12080 | 15700 | 1.30 | 0/3 | ○ | 2/3 | Δ |
| 15 | B | | 10750 | 15690 | 1.46 | 0/3 | ○ | 0/3 | ○ |
| 16 | B | g | 1609 | 15690 | 9.75 | 0/3 | ○ | 0/3 | ○ |
| 17 | B | g | 792 | 15690 | 19.8 | 0/3 | ○ | 3/3 | × |
| 18 | B | g | 769 | 15690 | 20.4* | 2/3 | Δ | 3/3 | × |

(Notes)
1) The asterisked figures indicate that they are outside the range specified by the present invention.
2) Of the measured torques, TS indicates the shouldering torque (g indicates use of a clearance gauge), and TF indicates the final tightening torque

In this example, the shouldering torque (TS) and the final tightening torque (TF) were determined by a method in which the torque was measured using a tightening apparatus having a load cell, and then they were read from a curve showing the relationship between the tightening torque and the number of turns. For some of the tests, in addition to the above measurement, abutment contact between the unthreaded shoulder portions of the pin and the coupling was confirmed with a clearance gauge, and the shouldering torque was determined. The ratio (TF/TS) of the final tightening torque to the shouldering torque was determined from the measured torque and shown in Table 1.

The test results of the joint evaluation test method and the augmented compression test method are shown by a leak occurrence rate given by (number of occurrences of leaks/number of tests). For each test number, there were three test specimens. The results of evaluation in these tests were expressed as a ○ mark for the case in which there was no occurrence of leaks and the gastightness was good for all of the test specimens, by a △ mark for the case in which leaks occurred and gastightness was somewhat poor for some of the test specimens, and by an × mark for the case in which leaks occurred and gastightness was poor for all of the test specimens.

As shown in Table 1, test numbers 1 - 9 used joint A, and test numbers 10 - 18 used joint B. For test numbers 1, 3, 4, 7, 8, 9, 10, 12, 13, 16, 17, and 18, it was confirmed with a clearance gauge that the unthreaded shoulder portions of the pin and the coupling had contacted each other by abutment. In Table 1, the mark "g" is added to the column for TS for the relevant joints.

For test numbers 4 - 8, the ratio (TF/TS) of the final tightening torque to the shouldering torque was 1.25 - 19.6, which was within the range prescribed by the present invention. There was no occurrence of leaks for any of them in the joint evaluation test method (API), and they exhibited good gastightness.

In contrast, test number 3 had a ratio (TF/TS) of the final tightening torque to the shouldering torque of 1.18, which was too low and below the range prescribed by the present invention, and leaks occurred in some test specimens in the joint evaluation test method (API). In test numbers 1 and 2, the ratio (TF/TS) of the final tightening torque to the shouldering torque was 1.05-1.11, which was even lower, and leaks occurred in all of the test specimens in the joint evaluation test method (API), and the gastightness was poor.

On the other hand, test number 9 had a ratio (TF/TS) of the final tightening torque to the shouldering torque of 20.6, which was so high that overtightening occurred, and plastic deformation took place in the unthreaded shoulder portions which had contacted each other by abutment. As a result, leaks occurred in some test specimens in the joint evaluation test method (API), and sufficient gastightness was not obtained.

In the same manner with respect to joint B, test numbers 13 - 17 had a ratio (TF/TS) of the final tightening torque to the shouldering torque of 1.27 - 19.8, which was in the range prescribed by the present invention. There was no occurrence of leaks in the joint evaluation test method (API), and they exhibited good gastightness.

In contrast, test numbers 10 - 12 had a ratio (TF/TS) of the final tightening torque to the shouldering torque which was too low and below the range prescribed by the present invention, and a good gastightness could not be exhibited in the joint evaluation test method (API). On the other hand, test number 18 had a ratio (TF/TS) of the final tightening torque to the shouldering torque which was too high and above the range prescribed by the present invention, and an adequate gastightness was not obtained in the joint evaluation test method (API).

Next, when evaluation was carried out by the augmented compression test method, for test numbers 6, 7, 15, and 16 for which the ratio (TF/TS) of the final tightening torque to the shouldering torque was within the range of 1.4 - 10, there was no occurrence of leaks, and good gastightness could be exhibited. From this result, it is apparent that if the ratio (TF/TS) of the final tightening torque to the shouldering torque can be controlled to be in the range of 1.4 - 10, good gastightness can be guaranteed even when a joint is subjected to severe load conditions.

As illustrated above, by employing a tightening method for a pipe joint according to the present invention, a sufficient gastightness is guaranteed in joining oil well pipes, and plastic deformation due to overtightening can be prevented regardless of the type, the dimensions, or the material of a joint or the conditions of use.

Industrial Applicability

According to the tightening method for a special joint according to the present invention, by controlling the ratio of the tightening torque at the completion of tightening to the shouldering torque when unthreaded shoulder portions come into contact by abutment so as to be within a prescribed range, an adequate gastightness can be guaranteed and plastic deformation due to overtightening can be prevented regardless of the type of pipe joint or the conditions of use. As a result, it can be widely utilized for the tightening of special joints used with oil well pipes even under current conditions in which the environments of oil wells are becoming more severe.

**Claims**

1. A method for tightening a pipe joint comprised of a pin and a coupling, said pin having a male thread, an unthreaded metal-to-metal sealing surface, and an unthreaded shoulder portion formed on the end of a pipe, said coupling having a female thread, an unthreaded metal-to-metal sealing surface, and an unthreaded shoulder portion so as to mate with the pin, **characterized in that** the tightening torque at the completion of tightening of the pipe joint is 1.25 - 20 times the shouldering torque at the time when the unthreaded shoulder portions of the pin and the coupling come into contact with each other by abutment.

2. A tightening method for a pipe joint as set forth in claim 1, **characterized in that** the tightening torque at the completion of tightening of the pipe joint is 1.4 - 10 times the shouldering torque at the time when the unthreaded shoulder portions of the pin and the coupling come into contact by abutment.

3. A tightening method for a pipe joint as set forth in claim 1 or claim 2, **characterized in that** the shouldering torque at the time of abutment contact between the unthreaded shoulder portions of the pin and the coupling is found from a curve showing the relationship between the tightening torque and the number of turns, and at the same time the abutment contact is confirmed using a gap measuring device to determine the shouldering torque.

4. A tightening method for a pipe joint as set forth in claim 1 or claim 2, **characterized in that** the shouldering torque at the time of abutment contact between the unthreaded shoulder portions of the pin and the coupling is found from a curve showing the relationship between the tightening torque and the number of turns, and at the same time the abutment contact is confirmed using a clearance gauge to determine the shouldering torque.

*Fig. 1*

(a)

(b)

# Fig. 2

Female
22. Thread

21. Coupling

13, 23. Unthreaded
Metal-to-Metal
Sealing Portion

11. Pin

12. Male Thread

14, 24. Unthreaded
Shoulder Portion

# Fig. 3

Final Tightening Torque

Tightening Torque

2nd Inflection Point

1st Inflection Point

Number of Turns in Tightening

# Fig. 4

Final Tightening Torque

Tightening Torque

2nd Inflection Point

1st Inflection Point

Number of Turns in Tightening

# EP 1 281 905 A1

## INTERNATIONAL SEARCH REPORT

International application No.

PCT/JP01/03881

### A. CLASSIFICATION OF SUBJECT MATTER
Int.Cl$^7$ F16L15/04

According to International Patent Classification (IPC) or to both national classification and IPC

### B. FIELDS SEARCHED

Minimum documentation searched (classification system followed by classification symbols)
Int.Cl$^7$ F16L15/00-15/08
B25B23/14 610

Documentation searched other than minimum documentation to the extent that such documents are included in the fields searched
Jitsuyo Shinan Koho         1926-1996    Toroku Jitsuyo Shinan Koho 1994-2001
Kokai Jitsuyo Shinan Koho   1971-2001    Jitsuyo Shinan Toroku Koho 1996-2001

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 6-221475, A (Kawasaki Steel Corporation),<br>09 August, 1994 (09.08.94),<br>Full text; Figs. 1-7<br>(Family: none) | 1,2<br>3,4 |
| X<br>A | JP 3-157594, A (NKK Corp),<br>05 July, 1991 (05.07.91),<br>Full text; Figs. 1-11<br>(Family: none) | 1,2<br>3,4 |
| P | JP 2000-161548 A (Matsushita Electric Industrial Ltd.),<br>16 June, 2000 (16.06.00),<br>(Family: none) | 3 |

☐ Further documents are listed in the continuation of Box C.   ☐ See patent family annex.

| | |
|---|---|
| \* Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>06 August, 2001 (06.08.01) | Date of mailing of the international search report<br>21 August, 2001 (21.08.01) |
| Name and mailing address of the ISA/<br>Japanese Patent Office | Authorized officer |
| Facsimile No. | Telephone No. |

Form PCT/ISA/210 (second sheet) (July 1992)

11